# EUROPEAN PATENT SPECIFICATION

(11) **EP 3 999 606 B1**
(45) Date of publication and mention of the grant of the patent: **04.03.2026**
(21) Application number: 19937423.2
(22) Date of filing: 18.07.2019
(51) Int. Cl.: C09J 133/08, C08F 220/18

(54) **ACRYLIC ADHESIVE COMPOSITION**
ACRYLHAFTZUSAMMENSETZUNG
COMPOSITION ACRYLIQUE ADHÉSIVE

(43) Date of publication of application: 25.05.2022
(73) Proprietor: Rohm and Haas Company, Collegeville, PA 19426 (US)
(72) Inventor: YANG, Miao, Shanghai 201203 (CN); QU, Zhaohui, Shanghai 201203 (CN)
(74) Representative: Boult Wade Tennant LLP
(86) International application number: PCT/CN2019/096517
(87) International publication number: WO 2021/007847

(56) References cited:
- WO-A1-2017/216108
- WO-A1-2017/216108
- CN-A- 101 080 472
- CN-A- 105 408 437
- CN-A- 107 043 607
- US-A1- 2004 143 058
- US-A1- 2017 073 551

## Description

### FIELD OF THE INVENTION

The present disclosure relates to an acrylic adhesive composition, in particular an acrylic pressure sensitive adhesive composition.

### INTRODUCTION

In recent years, use of polymeric packaging (e.g. polyethylene terephthalate (PET), high density polyethylene (HDPE), polyvinyl chloride (PVC), polypropylene (PP), or other plastic types) has increased due to their lightweight and good break resistance. Pressure sensitive filmic labels have also grown in usage with polymeric packaging systems due to improved moisture resistance and appearance, and the ability to recycle such packaging materials is desirable. Adhesion (peel property) and cohesion (shear property) are the most critical performances of a pressure sensitive adhesive (PSA) product. In the prior art, there are some pressure sensitive adhesive products with a good adhesion, but their cohesion is not satisfactory. Or, there are some pressure sensitive adhesive products with a good cohesion, but their adhesion is not satisfactory. US2004/143058A1, WO2017/216108A1 and US2017/073551A1 disclose pressure sensitive adhesives that comprise copolymers that are crosslinked with a dihydrazide crosslinker. A pressure sensitive adhesive product with a balanced adhesion and cohesion is desirable.

Accordingly, there is a strong need in the art for alternative pressure sensitive adhesive compositions that have desirable performances such as improved adhesion and/or cohesion or balanced adhesion and cohesion.

### SUMMARY OF THE INVENTION

The present invention, as defined in the appended claims, provides a novel pressure sensitive adhesive composition that has desirable performances, such as improved adhesion and/or cohesion or balanced adhesion and cohesion.

In a first aspect, the present disclosure provides a pressure sensitive adhesive composition comprising:
A) a polymer polymerized from a monomer mixture comprising
   (a) 40-90 wt% of C₆-C₁₀ alkyl acrylate;
   (b) 3-15 wt% of methyl (meth)acrylate;
   (c) 0.1-2 wt% of an ethylenically unsaturated compound having at least one keto or aldehyde group;
   (d) 0-2 wt% of an ethylenically unsaturated acid;
   (e) 0-30wt% of other ethylenically unsaturated monomers; wherein ethyl acrylate is present in an amount of 10 to 30% by weight;

   wherein the percentages are based on the total weight of the monomer mixture;
   and B) a polyhydrazide compound having at least two hydrazide functional groups which react with the keto or aldehyde groups by a crosslinking reaction.

In a second aspect, the present disclosure provides a self-adhesive article comprising a backing material and a pressure sensitive adhesive composition comprising:
A) a polymer polymerized from a monomer mixture comprising
   (a) 40-90 wt% of C₆-C₁₀ alkyl acrylate;
   (b) 3-15 wt% of methyl (meth)acrylate;
   (c) 0.1-2 wt% of an ethylenically unsaturated compound having at least one keto or aldehyde group;
   (d) 0-2 wt% of an ethylenically unsaturated acid;
   (e) 0-30wt% of other ethylenically unsaturated monomers; wherein ethyl acrylate is present in an amount of 10 to 30% by weight;

wherein the percentages are based on the total weight of the monomer mixture;
and B) a polyhydrazide compound having at least two hydrazide functional groups which react with the keto or aldehyde groups by a crosslinking reaction.

### DETAILED DESCRIPTION OF THE INVENTION

Unless defined otherwise, all technical and scientific terms used herein have the same meaning as commonly understood by one of ordinary skill in the art to which the invention belongs.

As disclosed herein, the term "composition", "formulation" or "mixture" refers to a physical blend of different components, which is obtained by mixing simply different components by a physical means.

As disclosed herein, the term "Glass transition temperature" (T_{g}) can be measured by various techniques including, for example, differential scanning calorimetry (DSC) or calculation by using a Fox equation.

Throughout this document, the word fragment "(meth)acryl" refers to both "methacryl" and "acryl". For example, (meth)acrylic acid refers to both methacrylic acid and acrylic acid, methyl (meth)acrylate refers to both methyl methacrylate and methyl acrylate and (meth)acryamide refers to both methacryamide and acryamide.

"Aqueous" composition or dispersion herein means that particles dispersed in an aqueous medium. By "aqueous medium" herein is meant water and from 0 to 30%, by weight based on the weight of the medium, of water-miscible compound(s) such as, for example, alcohols, glycols, glycol ethers, glycol esters, and the like.

The present disclosure provides a pressure sensitive adhesive composition comprising:
A) a polymer polymerized from a monomer mixture comprising
   (a) 40-90 wt% of C₆-C₁₀ alkyl acrylate;
   (b) 3-15 wt% of methyl (meth)acrylate;
   (c) 0.1-2 wt% of an ethylenically unsaturated compound having at least one keto or aldehyde group;
   (d) 0-2 wt% of an ethylenically unsaturated acid;
   (e) 0-30wt% of other ethylenically unsaturated monomers; wherein ethyl acrylate is present in an amount of 10 to 30% by weight;

wherein the percentages are based on the total weight of the monomer mixture;
and B) a polyhydrazide compound having at least two hydrazide functional groups which react with the keto or aldehyde groups by a crosslinking reaction.

Preferably, the C₆-C₁₀ alkyl acrylate is selected from 2-ethylhexyl acrylate and 2-propylheptyl acrylate. More preferably, the C₆-C₁₀ alkyl acrylate is 2-ethylhexyl acrylate.

Preferably, the amount of C₆-C₁₀ alkyl acrylate (a) in the monomer mixture can be not less than 50% by weight, not less than 60% by weight, not less than 65% by weight, not less than 70% by weight, but not greater than 90% by weight, preferably but not greater than 85% by weight, more preferably but not greater than 80% by weight. More preferably, the amount of C₆-C₁₀ alkyl acrylate is 65 to 90% by weight of the monomer mixture.

The monomer methyl (meth)acrylate (b) can be methyl acrylate, and/or methyl methacrylate.

Preferably, the amount of methyl (meth)acrylate (b) in the monomer mixture can be not less than 3% by weight, preferably not less than 4% by weight, more preferably not less than 5% by weight, even more preferably not less than 6% by weight, still more preferably not less than 8% by weight; but not greater than 15% by weight, preferably not greater than 13% by weight, more preferably not greater than 12% by weight, even more preferably not greater than 11% by weight, still more preferably not greater than 10% by weight.

The ethylenically unsaturated compound having at least one keto or aldehyde group (c) are, for example, acrolein, methacrolein, vinyl alkyl ketones having 1 to 20, preferably 1 to 10, carbon atoms in the alkyl radical, formylstyrene, (meth)acrylic acid alkyl esters having one or two keto or aldehyde or one aldehyde and one keto group in the alkyl radical, said alkyl radical comprising preferably, in total, 3 to 10 carbon atoms, examples being (meth)acryloyloxyalkylpropanals, as described in DE-A 2 722 097. Also suitable, furthermore, are N-oxoalkyl(meth)acrylamides such as are known, for example, from U.S. Pat. No. 4,228,007, DE-A 2 061 213 or DE-A 2 207 209.

Particular preference is given to acetoacetyl(meth)acrylate, acetoacetoxyethyl (meth)acrylate and, in particular, diacetone acrylamide (DAAM).

The amount of monomers (c) in the monomer mixture is 0.1 to 5% by weight, preferably 0.1 to 2% by weight and more preferably 0.2 to 1% by weight.

The ethylenically unsaturated acid (d) can be a sulfonic acid, phosphoric acid or, preferably, carboxylic acid. Suitable examples include maleic acid, fumaric acid and itaconic acid or, preferably, acrylic and/or methacrylic acid. Preferably, the ethylenically unsaturated acid (d) is acrylic acid.

Preferably, the amount of ethylenically unsaturated acid (d) in the monomer mixture can be not less than 0.1% by weight, preferably not less than 0.15% by weight, more preferably not less than 0.20% by weight, even more preferably not less than 0.25% by weight, but not greater than 5% by weight, preferably not greater than 4% by weight, more preferably not greater than 3% by weight, even more preferably not greater than 2% by weight, still more preferably not greater than 1% by weight.

The other ethylenically unsaturated monomers (e) can be of any kind. Suitable examples include C₁ to C₁₈ alkyl (meth)acrylate other than monomer (a) or monomer (b) , (meth)acryamide, vinyl aromatic compounds or a phosphorous functional monomer. Preferred examples of C₁ to C₁₈ alkyl (meth)acrylate other than monomer (a) or monomer (b) include ethyl acrylate, n-butyl acrylate and n-butyl methacrylate. Preferred examples of vinyl aromatic compounds include styrene and alpha-methylstyrene. The phosphorous functional monomer can be phosphorous-containing (meth)acrylates, such as phosphoethyl (meth)acrylate, phosphopropyl (meth)acrylate, phosphobutyl (meth)acrylate, salts thereof, and mixtures thereof; CH₂=C(R)-C(O)-O-(R₁)ₙP(O)(OH)₂, wherein R=H or CH₃, R₁=alkyl, and n=2-6, such as SIPOMER PAM-100, SIPOMER PAM-200, and SIPOMER PAM-300 all available from Solvay; phosphoalkoxy (meth)acrylates such as phospho ethylene glycol (meth)acrylate, phospho di-ethylene glycol (meth)acrylate, phospho tri-ethylene glycol (meth)acrylate, phospho propylene glycol (meth)acrylate, phospho di-propylene glycol (meth)acrylate, phospho tri-propylene glycol (meth)acrylate, salts thereof, and mixtures thereof.

The amount of ethyl acrylate is of 10 to 30% by weight. Preferably, the amount of ethyl acrylate in the monomer mixture is not less than 10% by weight, can be not less than 12% by weight, not less than 15% by weight, not less than 16 % by weight, but is not greater than 30% by weight, preferably but not greater than 25% by weight, more preferably but not greater than 20% by weight. More preferably, the amount of ethyl acrylate is 15 to 20% by weight.

The amount of the phosphorous functional monomer can be 0.01 to 2% by weight. Preferably, the amount of phosphorous functional monomer in the monomer mixture can be not less than 0.02% by weight, not less than 0.04% by weight, not less than 0.06% by weight, not less than 0.08 % by weight, but not greater than 2% by weight, preferably but not greater than 1% by weight, more preferably but not greater than 0.5% by weight, more preferably but not greater than 0.3% by weight. More preferably, the amount of phosphorous functional monomer is 0.06 to 0.3% by weight.

The amount of (meth)acryamide can be not less than 0.01% by weight, preferably not less than 0.05% by weight, more preferably not less than 0.10% by weight, even more preferably not less than 0.15% by weight, but not greater than 4% by weight, preferably not greater than 3% by weight, more preferably not greater than 2% by weight, even more preferably not greater than 1% by weight, still more preferably not greater than 0.5% by weight.

In one preferred embodiment, the polymer A) is prepared by emulsion polymerization, and is therefore an emulsion polymer.

In the case of emulsion polymerization, a suitable surfactant system and/or protective colloids, or stabilizer is used.

Examples of suitable surfactant systems are those known in the art and include anionic, nonionic, cationic, or amphoteric emulsifiers and mixtures thereof. Examples of anionic surfactants include, but are not limited to, alkyl sulfates, sulfates of ethoxylate alcohols, aryl sulfonates, phosphates of ethoxylated alcohols, sulfosuccinates, sulfates and sulfonates of ethoxylated alkylphenols, and mixtures thereof. Examples of nonionic surfactants include, but are not limited to, ethoxylated alcohols, ethoxylated alkylphenols, and mixtures thereof. Examples of cationic surfactants include, but are not limited to, ethoxylated fatty amines. The typical weight of surfactant is 0.1 to 5.0 wt. % and more preferably 0.3 to 5.0 wt. % and most preferably 0.5 to 3.0 wt. % based on total weight of monomers. The surfactants are utilized by conventional methods that are well known in art. In one embodiment, the process to prepare the PSA includes the emulsification of the monomer mix with the surfactant system prior to the polymerization reaction.

Examples of surfactant trade names are AEROSOL^{®} A-102, Disponil^{®} FES 77, Dowfax^{™} 2A1, Abex^{®} 2535 and RHODACAL^{®} DS-4.

Water-soluble initiators for the emulsion polymerization are, for example, ammonium salts and alkali metal salts of peroxodisulfuric acid, e.g., sodium peroxodisulfate, ammonium persulfate, hydrogen peroxide, or organic peroxides, e.g., tert-butyl hydroperoxide.

Also suitable are what are known as reduction-oxidation (redox) initiator systems.

The redox initiator systems are composed of at least one, usually inorganic reducing agent and one organic or inorganic oxidizing agent.

The oxidizing component comprises, for example, the emulsion polymerization initiators already mentioned above.

The reducing component comprises, for example, alkali metal salts of sulfurous acid, such as sodium sulfite, sodium hydrogen sulfite, alkali metal salts of disulfurous acid such as sodium disulfite, bisulfite addition compounds with aliphatic aldehydes and ketones, such as acetone bisulfite, or reducing agents such as hydroxymethanesulfinic acid and its salts, or ascorbic acid. The redox initiator systems may be used together with soluble metal compounds whose metallic component is able to exist in a plurality of valence states.

Examples of customary redox initiator systems include ascorbic acid/iron(II) sulfate/sodium peroxodisulfate, *tert*-butyl hydroperoxide/sodium disulfite, and *tert*-butyl hydroperoxide/Na hydroxymethanesulfinate. The individual components, the reducing component for example, may also be mixtures: for example, a mixture of the sodium salt of hydroxymethanesulfinic acid with sodium disulfite.

These compounds are mostly used in the form of aqueous solutions, the lower concentration being determined by the amount of water that is acceptable in the dispersion and the upper concentration by the solubility of the respective compound in water. The concentration is generally from 0.1 to 30% by weight, preferably from 0.5 to 20% by weight, with particular preference from 1.0 to 10% by weight, based on the solution.

The amount of the initiators is generally from 0.1 to 10% by weight, preferably from 0.3 to 5% by weight, based on the monomers to be polymerized. It is also possible for two or more different initiators to be used for the emulsion polymerization.

The emulsion polymerization takes place in general at from 30 to 130° C., preferably from 60 to 95° C. The polymerization medium may be composed either of water alone or of mixtures of water and water-miscible liquids such as methanol. Preferably, only water is used. The emulsion polymerization may be conducted either as a batch operation or in the form of a feed process, including staged or gradient procedures. Preference is given to the feed process in which a portion of the polymerization mixture is introduced as an initial charge and heated to the polymerization temperature, the polymerization of this initial charge is begun, and then the remainder of the polymerization mixture is supplied to the polymerization zone, usually by way of two or more spatially separate feed streams, of which one or more comprise the monomers in straight or emulsified form, this addition being made continuously, in stages or under a concentration gradient, and polymerization being maintained during said addition. It is also possible, in order, for example, to set the particle size more effectively, to include a polymer seed in the initial charge to the polymerization.

The manner in which the initiator is added to the polymerization vessel in the course of the free-radical aqueous emulsion polymerization is known to the skilled worker. It may either be included in its entirety in the initial charge to the polymerization vessel or else introduced, continuously or in stages, at the rate at which it is consumed in the course of the free-radical aqueous emulsion polymerization. In each specific case this will depend both on the chemical nature of the initiator system and on the polymerization temperature. It is preferred to include one portion in the initial charge and to supply the remainder to the polymerization zone at the rate at which it is consumed.

In order to remove the residual monomers, it is common to add initiator after the end of the actual emulsion polymerization as well, i.e., after a monomer conversion of at least 95%.

With the feed process, the individual components can be added to the reactor from the top, through the side, or from below, through the reactor floor.

In the case of emulsion polymerization, aqueous polymer dispersions with solids contents of generally from 15 to 75% by weight, preferably from 40 to 75% by weight, are obtained.

For a high reactor space/time yield, dispersions with as high as possible a solids content are preferred. In order to be able to achieve solids contents >60% by weight, a bimodal or polymodal particle size ought to be set, since otherwise the viscosity becomes too high and the dispersion can no longer be handled. Producing a new generation of particles can be done, for example, by adding seed (EP 81083), by adding excess quantities of emulsifier, or by adding miniemulsions. Another advantage associated with the low viscosity at high solids content is the improved coating behavior at high solids contents. One or more new generations of particles can be produced at any point in time. It is guided by the particle size distribution which is targeted for a low viscosity.

The polymer thus prepared is used preferably in the form of its aqueous dispersion.

The pH of the polymer dispersion is preferably adjusted to a pH of more than 4.5, and in particular to a pH of between 5 and 9.

The glass transition temperature of the polymer, or of the polymer, is preferably from -60 to -30° C, with particular preference from -55 to -30° C, and with very particular preference from -50 to -35° C.

The glass transition temperature can be determined by customary methods such as differential thermoanalysis or differential scanning calorimetry (see, for example, ASTM 3418/82, midpoint temperature).

Compound B) is a polyhydrazide compound having at least two hydrazide functional groups. Specific examples of polyhydrazide compounds include, but are not limited to, oxalic acid dihydrazide, malonic acid dihydrazide, succinic acid dihydrazide, glutaric acid dihydrazide; adipic acid dihydrazide, sebacic acid dihydrazide; monoolefin unsaturated dicarboxylic acid dihydrazide such as maleic acid dihydrazide, fumaric acid dihydrazide, itaconic acid dihydrazide; carbonic acid 10 polyhydrazide such as carbonic acid dihydrazide; aromatic dihydrazides such as phthalic acid dihydrazide, terephthalic acid dihydrazide, isophthalic acid dihydrazide; trihydrazides such as 1,2,4-butanetricarbohydrazide, 1,1,4-butanetricarbohydrazide, 1,2,5-pentanetricarbohydrazide, 1,3,6-hexanetricarbohydrazide, 1,3,7 -heptanetricarbohydrazide, and I-hydroxy-1,2,4-butanetricarbohydrazide, and mixtures or any subsets thereof. In one embodiment, the polyhydrazide includes adipic dihydrazide, isophthalic dihydrazide, sebacic dihydrazide, bis-semicarbizides, and mixtures thereof. In another embodiment, the polyhydrazide is adipic acid dihydrazide.

The effective amount of the polyhydrazide crosslinker is such that the ratio of hydrazine functionality is between about 0.02 and about 5 equivalents per 1 equivalent of the ketone or aldehyde functionality of the ethylenically unsaturated compound having at least one keto or aldehyde group, or between about 0.1 and about 3 equivalents per 1 equivalent of the ketone or aldehyde functionality of the ethylenically unsaturated compound having at least one keto or aldehyde group or between about 0.2 and about 1 equivalents per 1 equivalent of the ketone or aldehyde functionality of the ethylenically unsaturated compound having at least one keto or aldehyde group.

The polyhydrazide compound B) can be added at any point in the process. In one embodiment, it is added after the emulsion reaction.

The weight fraction of B) is preferably 0.05 to 2, in particular 0.05 to 1, and very preferably 0.1 to 0.7 part by weight per 100 parts by weight of polymer A), more preferably 0.1 to 0.3 part by weight per 100 parts by weight of polymer A).

Polymer A), or the aqueous dispersion of the polymer, can be mixed in a simple way with compound B). The resulting mixture is stable on storage.

The pressure sensitive adhesives (PSAs) may be composed solely of the polymer or of the aqueous dispersion of the polymer A) and compound B).

The PSAs may comprise further additives: a thickener, a defoamer, a wetting agent, a mechanical stabilizer, a pigment, a filler, a freeze-thaw agent, a neutralizing agent, a plasticizer, a tackifier (tackifying resin), an adhesion promoter, and combinations thereof. Examples of tackifiers are natural resins, such as rosins and their derivatives formed by disproportionation or isomerization, polymerization, dimerization and/or hydrogenation. They may be present in their salt form (with, for example, monovalent or polyvalent counterions (cations)) or, preferably, in their esterified form. Alcohols used for the esterification may be monohydric or polyhydric. Examples are methanol, ethanediol, diethylene glycol, triethylene glycol, 1,2,3-propanethiol, and pentaerythritol.

Also used are hydrocarbon resins, e.g. non-hydrogenated aliphatic C5 resins, hydrogenated aliphatic C5 resins, aromatic modified C5 resins, terpene resins, hydrogenated C9 resins, and combinations thereof.

Other compounds increasingly being used as tackifiers include polyacrylates which have a low molar weight. These polyacrylates preferably have a weight-average molecular weight MW of less than 30,000. With preference the polyacrylates are composed of at least 60% by weight, in particular at least 80% by weight, of C1-C8 alkyl (meth)acrylates.

Preferred tackifiers are natural or chemically modified rosins. Rosins are composed predominantly of abietic acid or its derivatives.

The amount by weight of tackifiers is preferably from 5 to 100 parts by weight, with particular preference from 10 to 50 parts by weight, per 100 parts by weight of polymer (solids/solids).

The PSAs may comprise 0 to 5 percent by weight of a thickener, based on the total weight of the adhesive composition. All individual values and subranges from 0 to 5 percent by weight are included herein and disclosed herein. For example, the wt% of the neutralizing agent can be from a lower limit of 0, 0.5, or 1 percent by weight to an upper limit of 1, 3, or 5 percent by weight. Example thickeners include, but are not limited to, ACRYSOL^{™}, UCAR^{™} and CELOSIZE^{™} which are commercially available from The Dow Chemical Company, Midland, Michigan.

The PSAs may comprise 0 to 2 percent by weight of a neutralizing agent, based on the total weight of the adhesive composition. All individual values and subranges from 0 to 2 percent by weight are included herein and disclosed herein. For example, the wt% of the neutralizing agent can be from a lower limit of 0, 0.3, or 0.5 percent by weight to an upper limit of 0.5, 1, or 2 percent by weight. Neutralizing agents are typically used to control pH to provide stability to the formulated pressure sensitive adhesive composition. Examples of the neutralizing agent include, but are not limited to, aqueous ammonia, aqueous amines, and other aqueous inorganic salts.

The PSAs are used for producing self-adhesive articles, such as labels, adhesive tapes or adhesive sheets, e.g., protective films.

The self-adhesive articles are generally composed of a backing with a layer of the adhesive applied to one or both sides, preferably to one side.

The backing material may comprise, for example, paper, metal foils, polymer films preferably made of polyolefins including polyethylene and polypropylene which can be biaxially or monoaxially oriented, polyethylene terephthalate (PET), polyvinyl chloride (PVC), polystyrene or polyamide.

The present disclosure provides a self-adhesive article comprising a backing material and a pressure sensitive adhesive composition disclosed herein.

To produce the adhesive layer on the backing material, the backing material can be coated conventionally. Customary application rates are, for example, 5 to 50 g/m² (solids, without water).

The coated substrates comprised are used, for example, as self-adhesive articles, such as labels, adhesive tapes or sheets, e.g., protective films. For subsequent use, the PSA-coated side of the substrate, for example the labels, can be covered with a release paper, such as with a siliconized paper.

The self-adhesive articles of the invention have good performance properties, in particular, improved adhesion and cohesion and/or an improved adhesion/cohesion balance.

### EXAMPLES

Some embodiments of the invention will now be described in the following Examples, wherein all parts and percentages are by weight unless otherwise specified.

### Raw material:

**Table 1: Raw Materials**

| Material | Description | Vendor |
|---|---|---|
| AEROSOL A-102 | Anionic surfactant | Cytec Solvay Group |
| RHODACAL DS-4 | Anionic surfactant | Cytec Solvay Group |
| BRUGGOLITE FF6 M | Reducing agent | BrüggemannChemical U.S., Inc. |
| SURFYNOL 420 | Nonionic dynamic wetting agent | Evonik Industries |
| ACRYSOL RM-2020 | Rheology modifier/thickener | The Dow Chemical Company |
| Chemicals not specified | Chemicals | Sinoreagent Company |
| 2-ethylhexyl acrylate | Acrylic emulsion monomers | The Dow Chemical Company |
| ("EHA"), ethyl acrylate | | |
| ("EA"), Butyl acrylate | | |
| ("BA"), methyl methacrylate ("MMA"), acrylic acid ("AA"), Acrylamide (AM) | | |
| PEM | 2-(phosphonooxy)ethyl methacrylate Phosphorous-containing monomer | The Dow Chemical Company |
| DAAM | Diacetone acrylamide | Sinoreagent Company |
| ADH | Adipic dihydrazide | Sinoreagent Company |

### Emulsion Polymerization Procedure

In general, the emulsion mixture according to the disclosure is prepared as follows. A four liter, five-neck reactor equipped with a condenser, a mechanical stirrer, a temperature-controlled thermal couple and inlets for initiators and monomers, is fed with 675 g of deionized ("DI") water and heated to 88 °C under a gentle N₂ flow. In a separate container, a monomer emulsion is prepared by mixing 275 g of DI water, 10 g of RHODACAL DS-4, 12 g of AEROSOL A-102, 2.5 g of Na₂CO₃, and 1,672 g of a monomer mixture comprising at least one of 2-ethylhexyl acrylate ("2-EHA"), butyl acrylate ("BA"), ethyl acrylate ("EA"), methyl methacrylate ("MMA"), acrylic acid ("AA"), AM, PEM, and DAAM.

Next, a solution of a mixture of Na₂CO₃ and ammonium persulfate ("APS") in 40 g DI water is added into the reactor. Immediately after addition of the solution of Na₂CO₃ and APS, the monomer emulsion is fed into the reactor. The feeding proceeds for 80 minutes.

Upon completion of the monomer emulsion addition, the reaction mixture is cooled to 60°C before gradual addition of a solution of *tert*-butyl hydroperoxide (70%) ("t-BHP") (9.2 g in 32 g DI water) and 6.8 g of a reducing agent, such as BRUGGOLITE FF6 M from Brüggemann Chemical US Company, Chadds Ford, Pennsylvania ("FF6"), in 34.5 g DI water, via two separate pipes over 30 minutes. Upon completion of the feeds, the reaction is cooled to room temperature. The obtained composition is then filtered through 325 mesh filter cloth to prepare the composition for subsequent evaluation work.

### Pressure Sensitive Adhesive Formulation

All samples are lightly formulated with a wetting agent, such as 0.3% (wet/wet) Surfynol 420 wetting agent obtained from Evonik Industries ("420"), based on total emulsion, to improve wet-out for lab drawdowns unless otherwise specified. ADH was also added. The viscosity is then adjusted to about 600 cps (Brookfield, RVDV, 30 rpm, 63#) using a thickener, such as ACRYSOL RM-2020 from The Dow Chemical Company, Midland, Michigan ("RM-2020"), and final pH is adjusted to 7.0~7.5 using ammonia.

### Lab Drawdowns

Polypropylene ("PP") film (60micrometer in thickness) is pre-treated by corona treatment before lamination. The formulated adhesive is coated to a release liner in an amount of 17 g/m² on dry weight basis and dried at 105 °C for 2 minutes. The PE film is laminated with the pressure sensitive adhesive coated release liner at 40°C under 40 psi pressure.

### Application Tests

Performance testing can be conducted after the adhesive laminate is conditioned in a controlled environment (22-24 °C, 50-60% relative humidity) testing laboratory for 5 days.

Peel Strength Test: FINAT Test Method No. 1 was followed for peel strength test at 90° on both glass and high density polyethylene (HDPE) test plates. Before testing, the sample strip (formulated without wax) was applied to test plate for dwell time of 20 minutes and one day.

Cohesion/Shear Test: FINAT Test Method No. 8 is used for the shear resistance test on glass test plates.

Failure mode is recorded behind the value of the tests: "AF" indicates adhesion failure, "AFB" indicates adhesion failure from backing, "MF" indicates mixed failure and "CF" indicates cohesion failure. Illustrative Examples ("IE") and Comparative Examples ("CE") are detailed in Table 1 below. Table 1 details the formulation and PSA property of the compositions of the IE and CE Examples.

**Table 1. Formulation and PSA property of comparative and inventive examples**

| | CE1 | IE1 | IE2 | IE3 | IE4 | IE5 | CE2 | Tg too high, use BA as CE3 | CE3 | CE4 | CE5 (Tg too high) | CE6 | CE7 |
|---|---|---|---|---|---|---|---|---|---|---|---|---|---|
| EHA | 71.5 | 71.6 | 71.6 | 71.6 | 71.6 | 71.5 | 71.5 | 30 | 30 | 90.1 | 60.6 | 78.6 | 69.85 |
| EA | 18.5 | 18.5 | 18.5 | 18.5 | 18.5 | 18.5 | 18.5 | 60.1 | | | 18.5 | 18.5 | 18.5 |
| BA | 0 | 0 | 0 | 0 | 0 | 0 | 0 | 0 | 60.1 | 0 | 0 | 0 | 0 |
| MMA | 9 | 9 | 9 | 9 | 9 | 9 | 9 | 9 | 9 | 9 | 20 | 2 | 9 |
| AA | 1 | 0.25 | 0.25 | 0.25 | 0.25 | 0.25 | 0.25 | 0.25 | 0.25 | 0.25 | 0.25 | 0.25 | 2 |
| AM | 0 | 0.15 | 0.15 | 0.15 | 0.15 | 0.15 | 0.15 | 0.15 | 0.15 | 0.15 | 0.15 | 0.15 | 0.15 |
| DAAM | 0 | 0.5 | 0.5 | 0.5 | 0.5 | 0.5 | 0.5 | 0.5 | 0.5 | 0.5 | 0.5 | 0.5 | 0.5 |
| PEM | 0 | 0 | 0 | 0 | 0 | 0.1 | 0.1 | 0 | 0 | 0 | 0 | 0 | 0 |
| Total | 100 | 100 | 100 | 100 | 100 | 100 | 100 | 100 | 100 | 100 | 100 | 100 | 100 |
| APS | 100 % | 100 % | 100 % | 74% | 74% | 100 % | 100 % | 100% | 100 % | 100 % | 100% | 100% | 100% |
| ADH | 0 | 0.12 5 | 0.17 5 | 0.12 5 | 0.17 5 | 0.12 5 | 0 | | 0.12 5 | 0.12 5 | 0.125 | 0.125 | 0.125 |
| linear Tg(°C) | -41. 1 | -41. 7 | -41. 7 | -41. 7 | -41. 7 | -41. 7 | -41. 7 | -21.7 | -38. 6 | -50. 6 | -25.4 | -52.1 | -38.7 |
| ShearDT 1min, 1*1*1kg, glass | 67C F | 44A F | 50A F | >20 0 | >20 0 | 81A F | 25C F | | 19C F | 16C F | | 3CF | 92CF |
| 90deg Peel (N/inch2) | | | | | | | | | | | | | |
| HDPE, RT, 20min, CTR | 4.5 AF | 5.2 AF | 5.3 AF | 5.3 AF | 5.8 AF | 5.4 AF | 6.2 AF | | 5.6 AF | 5.5 AF | | 7.2AF | 4.3AF |
| HDPE, RT, 1day, CTR | 4.8 AF | 6.1 AF | 5.7 AF | 5.8 AF | 6.1 AF | 6.2 AF | 6.7 AF | | 7.1 AF | 6.4 AF | | 7.5AF | 5.1AF |
| glass, RT, 20min, CTR | 6.6 AF | 6.9 AF | 7.4 AF | 6.6 AF | 5.7 AF | 6.7 AF | 7.3 AF | | 7.6 AF | 5.3 AF | | 8.9CF | 6.4AF |
| glass, RT, 1day, CTR | 7.2 AF | 9.7 AF | 9.4 AF | 7.6 AF | 6.7 AF | 8.1 AF | 8.4 AF | | 9.5 AF | 6.5 AF | | 10.2C F | 7.3AF |

In comparison with the formulation of CE1, the formulations of IE1~IE5 gave better HDPE peel. The formulations of IE1, IE2 and IE5 gave better 1 day glass peel. Shear performance of IE1~IE5 were adhesion failure which means cohesion was better than adhesion. The formulations of IE3 and IE4 gave >200hr shear which was much better than CE1 and CE2.

In comparison with the formulation of CE2, the formulation of IE5 gave higher shear and slight lower HDPE peel. The 1 day glass peel was comparable.

In comparison with the formulation of CE3 which comprises 30% of EHA in the monomer mixture, the formulations of IE1~IES gave much better shear property.

If the EA content in the monomer mixture is too high, the Tg will be too high. If the MMA content in the monomer mixture is too high, the Tg will be very high. An increase in Tg will lead to a stiffer polymer, decreased wettability, and most likely a decline in adhesive properties. Too high Tg polymer doesn't possess sufficient conformability to exhibit adequate pressure-sensitive adhesion, especially on low surface energy surface.

In comparison with formulation CE3 and CE4, the formulation of IE4 gave much better shear and similar or better adhesion on both glass and HDPE. Although CE6 gave good adhesion but too low shear performance (cohesion), while CE7 gave adequate shear but adhesion is lower than all the inventive examples of IE1~IES. Both CE6 and CE7 have poorer adhesion/cohesion balance than inventive examples.

## Claims

1. A pressure sensitive adhesive composition comprising:
A) a polymer polymerized from a monomer mixture comprising
(a) 40-90 wt% of C₆-C₁₀ alkyl acrylate;
(b) 3-15 wt% of methyl (meth)acrylate;
(c) 0.1-2 wt% of an ethylenically unsaturated compound having at least one keto or aldehyde group;
(d) 0-2 wt% of an ethylenically unsaturated acid;
(e) 0-30wt% of other ethylenically unsaturated monomers; wherein ethyl acrylate is present in an amount of 10 to 30% by weight;
wherein the percentages are based on the total weight of the monomer mixture;
and B) a polyhydrazide compound having at least two hydrazide functional groups which react with the keto or aldehyde groups by a crosslinking reaction.

2. The pressure sensitive adhesive composition of claim 1, wherein the amount of C₆-C₁₀ alkyl acrylate in the monomer mixture is 65 to 90% by weight.

3. The pressure sensitive adhesive composition of claim 1, wherein the C₆-C₁₀ alkyl acrylate is selected from the group consisting of 2-ethylhexyl acrylate and 2-propylheptyl acrylate.

4. The pressure sensitive adhesive composition of claim 1, wherein the ethylenically unsaturated compound having at least one keto or aldehyde group is selected from the group consisting of acetoacetyl(meth)acrylate, acetoacetoxyethyl (meth)acrylate and diacetone acrylamide.

5. The pressure sensitive adhesive composition of claim 1, wherein A) the polymer polymerized from the monomer mixture comprises
(a) 40-85 wt% of C₆-C₁₀ alkyl acrylate.

6. The pressure sensitive adhesive composition of claim 1, wherein the other ethylenically unsaturated monomers (e) is selected from the group consisting of ethyl acrylate, n-butyl acrylate, n-butyl methacrylate, (meth)acryamide, vinyl aromatic compounds and a phosphorous functional monomer.

7. The pressure sensitive adhesive composition of claim 1, wherein the ethylenically unsaturated acid is selected from the group consisting of a sulfonic acid, phosphoric acid and carboxylic acid.

8. The pressure sensitive adhesive composition of claim 1, wherein the polyhydrazide compound having at least two hydrazide functional groups which react with the keto or aldehyde groups by a crosslinking reaction is oxalic acid dihydrazide, malonic acid dihydrazide, succinic acid dihydrazide, glutaric acid dihydrazide; adipic acid dihydrazide, sebacic acid dihydrazide; monoolefin unsaturated dicarboxylic acid dihydrazide; carbonic acid 10 polyhydrazide; aromatic dihydrazides; trihydrazides, and mixtures or any subsets thereof.

9. The pressure sensitive adhesive composition of claim 1, wherein the amount of the polyhydrazide crosslinker is such that the ratio of hydrazine functionality is between about 0.02 and about 5 equivalents per 1 equivalent of the ketone or aldehyde functionality of the ethylenically unsaturated compound having at least one keto or aldehyde group.

10. A self-adhesive article comprising a backing material and a pressure sensitive adhesive composition according to any one of claims 1-9.

11. The self-adhesive article of claim 10, wherein the backing material is paper, metal foil or polymer films.

## Patentansprüche

1. Haftklebstoffzusammensetzung, umfassend:
A) ein Polymer, das aus einer Monomermischung polymerisiert ist, die umfasst
(a) 40-90 Gew.-% C₆-C₁₀-Alkylacrylat;
(b) 3-15 Gew.-% Methyl(meth)acrylat;
(c) 0,1-2 Gew.-% eine ethylenisch ungesättigte Verbindung mit mindestens einer Keto- oder Aldehydgruppe;
(d) 0-2 Gew.-% eine ethylenisch ungesättigte Säure;
(e) 0-30 Gew.-% andere ethylenisch ungesättigte Monomere; wobei Ethylacrylat in einer Menge von 10 bis 30 Gew.-% vorhanden ist;
wobei die Prozentangaben auf dem Gesamtgewicht der Monomermischung basieren;
und B) eine Polyhydrazidverbindung mit mindestens zwei Hydrazidfunktionsgruppen, die mit den Keto- oder Aldehydgruppen durch eine Vernetzungsreaktion reagieren.

2. Haftklebstoffzusammensetzung nach Anspruch 1, wobei die Menge an C₆-C₁₀-Alkylacrylat in der Monomermischung 65 bis 90 Gew.-% beträgt.

3. Haftklebstoffzusammensetzung nach Anspruch 1, wobei das C₆-C₁₀-Alkylacrylat ausgewählt ist aus der Gruppe bestehend aus 2-Ethylhexylacrylat und 2-Propylheptylacrylat.

4. Haftklebstoffzusammensetzung nach Anspruch 1, wobei die ethylenisch ungesättigte Verbindung mit mindestens einer Keto- oder Aldehydgruppe ausgewählt ist aus der Gruppe bestehend aus Acetoacetyl(meth)acrylat, Acetoacetoxyethyl(meth)acrylat und Diacetonacrylamid.

5. Haftklebstoffzusammensetzung nach Anspruch 1, wobei A) das aus der Monomermischung polymerisierte Polymer umfasst
(a) 40-85 Gew.-% C₆-C₁₀-Alkylacrylat.

6. Haftklebstoffzusammensetzung nach Anspruch 1, wobei die anderen ethylenisch ungesättigten Monomere (e) ausgewählt sind aus der Gruppe bestehend aus Ethylacrylat, n-Butylacrylat, n-Butylmethacrylat, (Meth)acrylamid, vinylaromatischen Verbindungen und einem phosphorfunktionellen Monomer.

7. Haftklebstoffzusammensetzung nach Anspruch 1, wobei die ethylenisch ungesättigte Säure ausgewählt ist aus der Gruppe bestehend aus einer Sulfonsäure, Phosphorsäure und Carbonsäure.

8. Haftklebstoffzusammensetzung nach Anspruch 1, wobei die Polyhydrazidverbindung mit mindestens zwei Hydrazidfunktionsgruppen, die mit den Keto- oder Aldehydgruppen durch eine Vernetzungsreaktion reagieren, Oxalsäuredihydrazid, Malonsäuredihydrazid, Bernsteinsäuredihydrazid, Glutarsäuredihydrazid; Adipinsäuredihydrazid, Sebacinsäuredihydrazid; Monoolefinungesättigtes Dicarbonsäuredihydrazid; Kohlensäure-10-polyhydrazid; aromatische Dihydrazide; Trihydrazide und Mischungen oder beliebige Teilmengen davon ist.

9. Haftklebstoffzusammensetzung nach Anspruch 1, wobei die Menge des Polyhydrazid-Vernetzers derart ist, dass das Verhältnis der Hydrazinfunktionalität zwischen etwa 0,02 und etwa 5 Äquivalenten pro 1 Äquivalent der Keton- oder Aldehydfunktionalität der ethylenisch ungesättigten Verbindung mit mindestens einer Keto- oder Aldehydgruppe liegt.

10. Selbstklebender Gegenstand, umfassend ein Trägermaterial und eine Haftklebstoffzusammensetzung nach einem der Ansprüche 1-9.

11. Selbstklebender Gegenstand nach Anspruch 10, wobei das Trägermaterial Papier, Metallfolie oder Polymerfilme ist.

## Revendications

1. Composition d'adhésif sensible à la pression comprenant :
A) un polymère polymérisé à partir d'un mélange de monomères comprenant
(a) 40 à 90 % en poids d'acrylate d'alkyle en C₆-C₁₀ ;
(b) 3 à 15 % en poids de (méth)acrylate de méthyle ;
(c) 0,1 à 2 % en poids d'un composé à insaturation éthylénique ayant au moins un groupe céto ou aldéhyde ;
(d) 0 à 2 % en poids d'un acide à insaturation éthylénique ;
(e) 0 à 30 % en poids d'autres monomères à insaturation éthylénique ; dans laquelle l'acrylate d'éthyle est présent en une quantité de 10 à 30 % en poids ;
dans laquelle les pourcentages sont basés sur le poids total du mélange de monomères ;
et B) un composé polyhydrazide ayant au moins deux groupes fonctionnels hydrazide qui réagissent avec les groupes céto ou aldéhyde par une réaction de réticulation.

2. Composition d'adhésif sensible à la pression selon la revendication 1, dans laquelle la quantité d'acrylate d'alkyle en C₆-C₁₀ dans le mélange de monomères est de 65 à 90 % en poids.

3. Composition d'adhésif sensible à la pression selon la revendication 1, dans laquelle l'acrylate d'alkyle en C₆-C₁₀ est choisi dans le groupe constitué d'acrylate de 2-éthylhexyle et d'acrylate de 2-propylheptyle.

4. Composition d'adhésif sensible à la pression selon la revendication 1, dans laquelle le composé à insaturation éthylénique ayant au moins un groupe céto ou aldéhyde est choisi dans le groupe constitué d'acétoacétyl(méth)acrylate, acétoacétoxyéthyl(méth)acrylate et diacétone acrylamide.

5. Composition d'adhésif sensible à la pression selon la revendication 1, dans laquelle A) le polymère polymérisé à partir du mélange de monomères comprend
(a) 40 à 85 % en poids d'acrylate d'alkyle en C₆-C₁₀.

6. Composition d'adhésif sensible à la pression selon la revendication 1, dans laquelle les autres monomères à insaturation éthylénique (e) sont choisis dans le groupe constitué d'acrylate d'éthyle, acrylate de n-butyle, méthacrylate de n-butyle, (méth)acrylamide, composés vinylaromatiques et un monomère fonctionnel phosphoré.

7. Composition d'adhésif sensible à la pression selon la revendication 1, dans laquelle l'acide à insaturation éthylénique est choisi dans le groupe constitué d'un acide sulfonique, d'un acide phosphorique et d'un acide carboxylique.

8. Composition d'adhésif sensible à la pression selon la revendication 1, dans laquelle le composé polyhydrazide ayant au moins deux groupes fonctionnels hydrazide qui réagissent avec les groupes céto ou aldéhyde par une réaction de réticulation est dihydrazide d'acide oxalique, dihydrazide d'acide malonique, dihydrazide d'acide succinique, dihydrazide d'acide glutarique ; dihydrazide d'acide adipique, dihydrazide d'acide sébacique ; dihydrazide d'acide dicarboxylique insaturé de monooléfine ; polyhydrazide d'acide carbonique 10 ; dihydrazides aromatiques ; trihydrazides, et mélanges ou tous sous-ensembles de ceux-ci.

9. Composition d'adhésif sensible à la pression selon la revendication 1, dans laquelle la quantité de l'agent de réticulation polyhydrazide est telle que le rapport de fonctionnalité hydrazine est compris entre environ 0,02 et environ 5 équivalents pour 1 équivalent de la fonctionnalité cétone ou aldéhyde du composé à insaturation éthylénique ayant au moins un groupe céto ou aldéhyde.

10. Article auto-adhésif comprenant un matériau de support et une composition adhésive sensible à la pression selon l'une quelconque des revendications 1 à 9.

11. Article auto-adhésif selon la revendication 10, dans lequel le matériau de support est du papier, une feuille métallique ou des films polymères.
